# EUROPEAN PATENT APPLICATION

(11) **EP 2 806 250 A1**
(43) Date of publication of application: **26.11.2014**
(21) Application number: 14168347.4
(22) Date of filing: 14.05.2014
(51) Int. Cl.: G01D 4/02

(54) **Utility meter with configurable sealed data**

(30) Priority: 20.05.2013 US 201313898290
(71) Applicant: General Electric Company, Schenectady, New York 12345 (US)
(72) Inventor: Lavoie, Gregory Paul, Somersworth, NH New Hampshire 03878 (US); Perron, Jason Lee, Somersworth, NH New Hampshire 03878 (US)
(74) Representative: Illingworth-Law, William Illingworth

(57) **Abstract**

A system is provided with a utility meter 18. The utility meter 18 includes a memory 26 storing a table 30, wherein the table 30 specifies modifiable data that may be modified when the utility meter 18 is sealed and non-modifiable data that may not be modified when the utility meter 18 is sealed. The utility meter 18 also includes a processing device 24 configured to access the table stored on the memory 26 or another memory to determine whether specific data stored on the memory 26 or another memory may be modified when the utility meter 18 is sealed.

## Description

The subject matter disclosed herein relates to utility meters, and more particularly to methods and systems for specifying data that may or may not be modified upon sealing of the utility meters.

In certain markets where utility meters (e.g., electricity meters) are sold, regulatory requirements dictate that certain metering parameters and/or firmware (e.g., firmware components or functions) must be sealed. In a sealed state, the metering parameter and/or firmware cannot be changed (e.g., data cannot be modified over a communication port) without certification or recertification by a governing body. These regulatory requirements make it difficult for meter manufacturers to define which metering parameters and/or firmware functions need to be sealed for each market. In current meters, the list of metering parameters and/or firmware functions that must be sealed is hard-coded (i.e., program statements written into a computer program itself). As a result, a meter manufacturer may have to utilize different, e.g., firmware packages for different regions based on differences in the regulatory requirements due to a lack of flexibility available to the meter manufacturer in defining what parameters and/or firmware functions are to be sealed.

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In accordance with a first embodiment, a system is provided with a utility meter. The utility meter includes a memory storing a table, wherein the table specifies modifiable data that may be modified when the utility meter is sealed and non-modifiable data that may not be modified when the utility meter is sealed. The utility meter also includes a processing device configured to access the table stored on the memory or another memory to determine whether specific data stored on the memory or another memory may be modified when the utility meter is sealed.

In accordance with a second embodiment, a non-transitory computer-readable medium having computer executable code stored thereon is provided. The code includes instructions for accessing an external table stored on a memory of a utility meter or another memory external to the utility meter. The external table specifies modifiable data that may be modified when the utility meter is sealed and non-modifiable data that may not be modified when the utility meter is sealed. The code also includes instructions for determining, based on the external table, whether specific data stored on the memory or another memory may be modified when the utility meter is sealed.

In accordance with a third embodiment, a system is provided with a memory. The memory stores a table, wherein the table specifies modifiable data that may be modified when a utility meter is sealed or non-modifiable data that may not be modified when the utility meter is sealed or both the modifiable data and the non-modifiable data. The system also includes a processing device configured to access the table stored on the memory or another memory to determine whether specific data stored on the memory or another memory may be modified when the utility meter is sealed.

These and other features, aspects, and advantages of the present invention will become better understood when the following detailed description is read with reference to the accompanying drawings in which like characters represent like parts throughout the drawings, wherein:
FIG. 1 is a system-level diagram of an embodiment of a utility network with smart meters (e.g., utility meters) connected to an advanced metering infrastructure (AMI) network;
FIG. 2 is a detailed diagram of an embodiment of a smart meter (e.g., utility meter) of FIG. 1 connected to the AMI network;
FIG. 3 is an example of a table (e.g., seal table) specifying a seal flag protection status of data (e.g., of other tables);
FIG. 4 is an example of a table (e.g., seal table) specifying a seal flag protection status of data (e.g., functions, procedures, parameters, etc.);
FIG. 5 is an example of a table (e.g., seal table) specifying a seal flag protection status of data (e.g., procedure steps); and
FIG. 6 is flow diagram illustrating an embodiment of a method for determining whether specific data may be modified when the smart meter (e.g., utility meter) is sealed.

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

Certain markets impose regulatory requirements that designate that specific metering parameters and/or firmware (e.g., firmware components or functions) for utility meters (e.g., electricity meters) must be sealed. Sealing a meter may consist of setting a flag in the meter's non-volatile memory via a communication port. Once sealed, the meter cannot be unsealed until its cover is removed (this typically involves removing a physical seal first). Unsealing the meter may consist of pressing a series of buttons (e.g., RESET and TEST buttons) in an appropriate sequence. In a sealed state, the metering parameter and/or firmware cannot be changed (e.g., data cannot be modified over a communication port) without certification or recertification of the meter by a governing body. These regulatory requirements make it difficult for meter manufacturers to define which metering parameters and/or firmware functions need to be sealed for each market. In addition, in current meters, the list of metering parameters and/or firmware functions that must be sealed is hard-coded (i.e., program statements written into a computer program itself), e.g., within the firmware. As a result, a meter manufacturer may have to utilize different, e.g., firmware packages for different regions based on different regulatory requirements. This limits the flexibility available to the meter manufacturer in defining what parameters and/or firmware functions are to be sealed.

Present embodiments relate to a utility meter (e.g., smart meter such as a smart electricity meter, water meter, natural gas meter, etc.), which includes a memory that stores a table (e.g., seal table) that specifies which data (e.g., metering data, metering parameters, firmware functions or components, etc.) may be modified when the utility meter is sealed. In particular, the seal table may specify modifiable data that may be modified when the utility meter is sealed and non-modifiable data that may not be modified when the utility meter is sealed. In certain embodiments, the seal table is an external (i.e., separate from the computer program or code) table (e.g., that holds values and parameters used by the computer program) that is not hard-coded into the computer program (e.g., firmware). When the utility meter is unsealed, the seal table may be modified (e.g., the seal table and all other tables are writable). When the utility meter is sealed, the seal table may not be modified. The utility meter also includes a processor that accesses the seal table stored on the memory to determine whether specific data (e.g., stored on the memory or another memory) may be modified when the utility meter is sealed. In certain embodiments, the processor may block modification of the non-modifiable data when the utility meter is sealed, while enabling modification of the modifiable data when the utility meter is sealed. The seal table provides flexibility to the meter manufacturer in defining what metering parameters and functions are to be sealed without having to use multiple, different firmwares for different regions with different regulatory requirements. Instead, the meter manufacturer may utilize a common seal table and modify it to specify the sealed metering parameters and functions for a specific region.

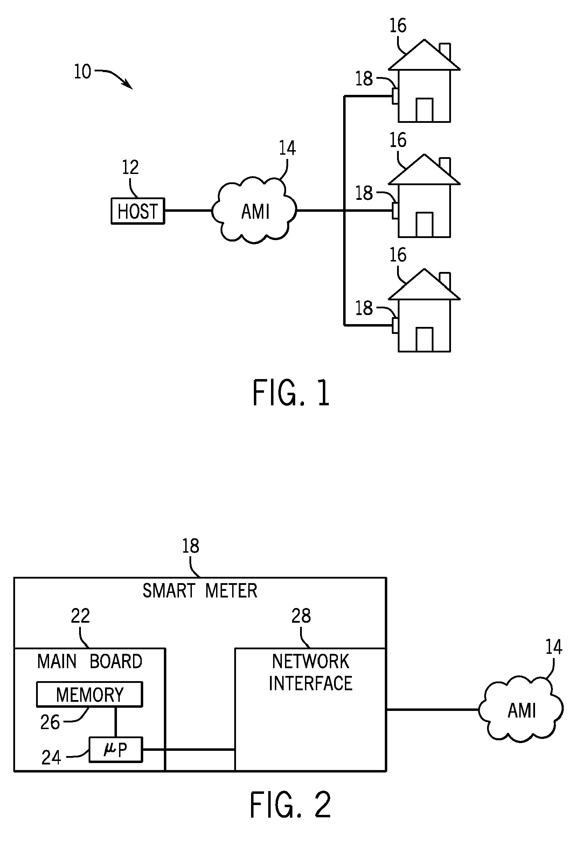

With the foregoing in mind, it may be useful to describe an embodiment of a utility network 10 with smart meters 18 (e.g., smart utility meters such as smart electrical meters, water meter, natural gas meter, etc.) connected to an AMI network 14, such as the system illustrated in FIG. 1. As described in greater detail below, each of the smart meters 18 may include a memory that stores a table (e.g., seal table) that specifies whether certain data (e.g., metering data, metering parameters, firmware functions or components, etc.) may be modified when the smart meter 18 is sealed. The data specified as modifiable by the seal table may be modified via the utility network 10, e.g., to modify metering data or parameters, modify procedures, and/or update firmware. Each of the smart meters 18 may also include a processing device (e.g., one or more processors for conducting metering operations) to access the seal table to determine what data may be modified when the utility meter 18 is sealed. In certain embodiments, the meter 18 may include multiple memory blocks. Some of the memory blocks may be internal to the processing device, while other memory blocks may be external to the processing device.

As depicted, the AMI network system 10 may include one or more host units 12 that are connected to an AMI network 14 and designed to provide oversight operations of the AMI network system 10. Each host unit 12 in the AMI network system 10 may include processors and/or other data processing circuitry that may be operably coupled to a storage and a memory to execute instructions for carrying out a variety of oversight operations of other utilities in the AMI network system 10. For example, in certain embodiments, each host unit 12 may be a utility control center. In addition to sending commands and data to other utilities in the AMI network system 10, utility control centers may provide oversight operations of a smart grid system, such as monitoring and directing power produced by one or more power generation stations. In other embodiments, the utility control centers may report data about the AMI network system 10 to external sources, such as operation centers or other hosts of other AMI networks.

In addition to host units 12, the AMI network system 10 may include customer residences 16 that include utility meters 18. Utility meters 18 may be located on commercial buildings, apartment residences, or any other entity that is connected to the utility network 10. The host unit 12 may issue commands or send data, such as firmware updates, to a plurality of utility meters 18. In certain embodiments, the host unit 12 may include a table in storage to maintain status information of the utility meters 18 connected to the AMI network 14. The host unit 12 may monitor the table to monitor the status of each utility meter 18 and determine which utility meters 18 require updates (e.g., firmware updates).

Moving from a system level to a specific component, further detail of the hardware of the utility meter 18 is illustrated in FIG. 2. In the embodiments illustrated in FIGS. 1 and 2, the utility meter 18 is a smart meter (e.g., electricity meter, water meter, natural gas meter, etc.). Smart meters may record the consumption of utilities (e.g., electricity, water, natural gas, etc.), report utility consumption values back to host units 12 on the AMI network 14, and receive data and commands from hosts on the AMI network 14. The utility meter 18 of FIG. 2 includes a main board 22 and a network interface 28. The main board 22 includes a microprocessor 24 and a memory 26 and may include other components of a microcontroller or embedded system. The microprocessor 24 may execute instructions to carry out the operation of the smart meter 18. As noted above, the utility meter 18 may include a processing device that includes one or more microprocessors 24. These instructions may be encoded in programs or code stored in a tangible non-transitory computer-readable medium, such as the memory 26 and/or other storage. As noted above, the memory 26 may include one or more memory blocks. Some memory blocks may be internal to the microprocessor 24 or processing device, while other memory block may be external to the microprocessor 24 or processing device.

The memory 26 stores metering data (e.g., meter configuration data, calibration data, kWh usage, water usage, natural gas usage, etc.), metering parameters (e.g., measuring quantities, demand interval length, etc.), and firmware components (e.g., functions, tasks, modules, threads, etc.), which are read from the utility meter 18 in a plurality of tables. The memory 26 also stores an additional table (e.g., seal table) that identifies modifiable data that may be modified when the utility meter 18 is sealed and/or non-modifiable data that may not be modified when the utility meter 18 is sealed. The seal table may specify the modifiable and/or non-modifiable data. In certain embodiments, the seal table may be stored in a memory separate from the other metering tables. In certain embodiments, the granularity or resolution of the seal table may vary from a table level to an individual table entry level as described in greater detail below. The seal table specifically specifies what metering data, metering parameters, and/or firmware components may or may not be modified when the utility meter 18 is sealed. In certain embodiments, all of the tables (including the seal table) are external tables (i.e., not hard-coded into the programs or instructions stored on the memory 26) that hold values and parameters for the metering data, metering parameters, and/or firmware components. In addition, in certain embodiments, all of the tables (including the seal table) may be defined in accordance with the ANSI C12.19 standard. The ANSI C12.19 allows for manufacturer-defined tables as well as standard tables, all of which may be defined in the seal table. The seal table itself cannot be modified when the utility meter 18 is sealed. Instead, the seal table or seal table portion can only be modified when the utility meter 18 is unsealed.

As mentioned above, the memory 26 stores instructions for the microprocessor 24 to execute. For example, the memory 26 stores instructions for accessing the seal table (e.g., external table) stored on the memory 26. The memory 26 also stores instructions for determining, based on the seal table, whether specific data (e.g., metering data, metering parameters, firmware components, etc.) stored on the memory 26 may be modified when the utility meter 18 is sealed. The memory 26 further stores instructions for blocking modification of the seal table when the utility meter 18 is sealed. The memory 26 yet further stores instructions for blocking modification of the non-modifiable data when the utility meter 18 is sealed and/or for enabling modification of the modifiable data when the utility meter 18 is sealed.

Based on the instructions stored in the memory 26, the microprocessor 24 may access the seal table (e.g., external table) stored on the memory 26 to determine whether specific data (e.g., metering data, metering parameters, firmware components, etc.) stored on the memory 26 or another memory may be modified when the utility meter 18 is sealed. The microprocessor 24 may block modification of non-modifiable data (including the seal table) when the utility meter is sealed. The microprocessor 24 may also enable modification of the modifiable data when the utility meter 18 is sealed. As mentioned above, the seal table provides flexibility to a meter manufacturer in defining what metering parameters and functions are to be sealed without having to use multiple, different firmwares for different regions with different regulatory requirements. Instead, the meter manufacturer may utilize a common seal table and modify it to specify the sealed metering parameters and functions for a specific region. In certain embodiments, a memory external to the utility meter 18 may include the seal table. For example, the seal table may be included in a remote location from the utility meter 18. In addition, in certain embodiments, a processing device external to the utility meter 18 may access a memory (e.g., internal or external to the utility meter 18) to access the seal table. For example, a third party radio (e.g., SSN) may include the seal table and control access to the meter's tables.

To enable communication over the AMI network 14, the microprocessor 24 may be connected to a network interface 28. The network interface 28 may enable the microprocessor 24 to communicate over the AMI network 14. The network interface 28 may send information related to what data is sealed and receive update data (e.g., firmware update data) over the AMI network 14 and communicate with the microprocessor 24 to record time stamps and time intervals between communications over the AMI network 14. The time data may be stored in the memory 26 of the utility meter 18 in any appropriate data structure such as a table, an array, a linked list, specified registers, variables, or a combination thereof.

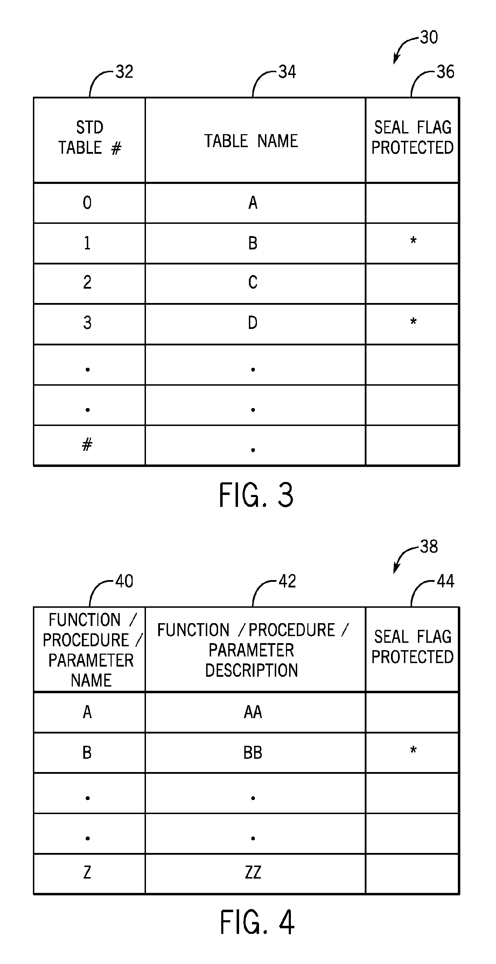

As mentioned above, the granularity or resolution of the seal table may vary from a table level to an individual table entry level. FIGS. 3-5 provide examples of seal tables specifying a seal flag protection status of data. Other embodiments of the seal tables are contemplated. The number of columns and rows in the seal tables may vary. Also, the information included in the seal tables may vary. FIG. 3 illustrates a seal table 30 with a resolution at the table level. The seal table 30 includes columns for a standard table number 32, a table name 34, and a seal flag protection status 36. The seal flag protection status 36 indicates whether a specific table is modifiable (not seal flag protected) or non-modifiable (seal flag protected) when the utility meter 18 is sealed. For example, in seal table 30, tables 1 and 3 are seal flag protected. A general configuration table, a unit of measure table, and a demand control table represent a few examples of tables that may be listed among the tables on the seal table 30.

FIG. 4 illustrates a seal table 38 with a resolution at an individual table entry level. The seal table 38 includes columns for a name 40 of a particular function, procedure, or parameter, a description 42 of the particular function, procedure, or parameter, and a seal flag protection status 44. The seal flag protection status 44 is as described above in FIG. 3. In the seal table 38, the function, procedure, or parameter B is seal flag protected. Entries in the general configuration table, a unit of measure table, and a demand control table represent a few examples of tables that may include individual entries that may be listed on the seal table 38. This could be specified as an entry name, an entry index, or an offset into the table.

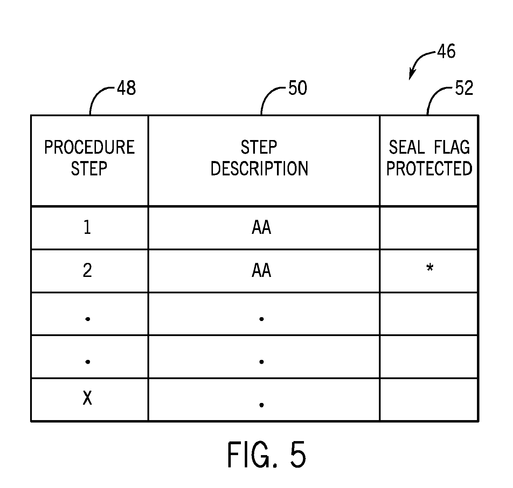

FIG. 5 illustrates a seal table 46 with a resolution at an individual table entry level. The seal table 46 includes columns for a procedure step number 48 for a particular procedure, a step description 50, and a seal flag protection status 52. The seal flag protection status 52 is as described above in FIG. 3. In the seal table 46, procedure step 2 is seal flag protected. Steps in a cold start procedure (e.g., to return the meter 18 to its default state) or a clear data procedure (e.g., to clear billing and diagnostic data in the meter 18) represent a few examples of procedures that may include individual entries that may be listed on the seal table 46.

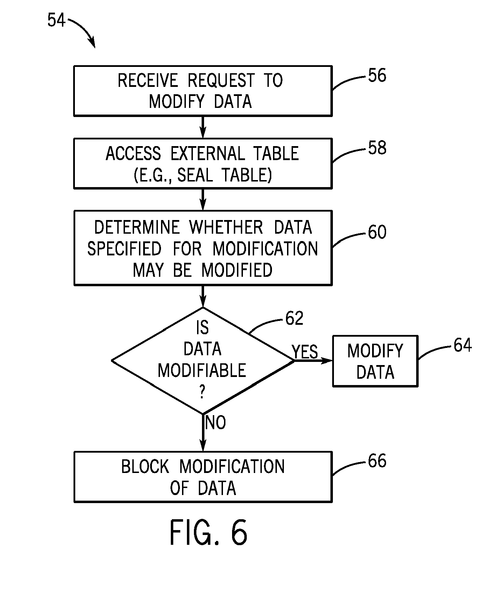

FIG. 6 is flow diagram illustrating an embodiment of a computer-implemented method 54 for determining whether specific data may be modified when the utility meter 18 is sealed. In the method 54, the microprocessor 24 receives a request from the AMI network 14, via the network interface 28, to modify (or update) data (e.g., metering data, metering parameters, firmware components, etc.) (block 56). Alternatively, the microprocessor 24 may receive a request to provide an indication of what data may be modified and/or what data may not be modified. In response to the request, the microprocessor 24 accesses an external table (e.g., seal table) from the memory 26 (block 58). As mentioned above, the seal table specifies what data (e.g., metering data, metering parameters, firmware components, etc.) may or may not be modified when the utility meter 18 is sealed. Based on the seal table, the microprocessor 24 determines whether the data specified for modification may be modified when the utility meter 18 is sealed (block 60). Upon determining whether the data is modifiable (block 62), the microprocessor 24 determines the seal flag protection status of the data from the seal table. If the data is modifiable (i.e., not seal flag protected), the microprocessor 24 modifies or updates the specified data stored on the memory 26 (e.g., in the other tables excluding the seal table) (block 64). If the data is non-modifiable (i.e., seal flag protected), the microprocessor 24 blocks modification or updating of the specified data (block 66).

Technical effects of the disclosed embodiments include providing techniques and systems to provide flexibility to the meter manufacturer in defining what metering parameters and functions are to be sealed without having to use multiple, different firmwares for different regions with different regulatory requirements. Specifically, the disclosed embodiments include providing the utility meter 18 (e.g., smart meter such as a smart electricity meter, water meter, natural gas meter, etc.) with memory 26 storing a table (e.g., seal table) that specifies whether certain data (e.g., metering data, metering parameters, firmware functions or components, etc.) may be modified when the utility meter 18 is sealed. The seal table is an external table (i.e., separate from the computer programs or code) that is not hard-encoded into the computer programs or code stored on the memory 26. This allows the meter manufacturer to utilize a common seal table that may be modified to specify the sealed metering parameters and functions for a specific region without having to utilize multiple, different firmwares. In certain embodiments, the seal table may be stored external to the utility meter 18.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A system comprising:
   a utility meter, comprising:
      a memory storing a table, wherein the table specifies modifiable data that may be modified when the utility meter is sealed and non-modifiable data that may not be modified when the utility meter is sealed; and
      a processing device configured to access the table stored on the memory or another memory to determine whether specific data stored on the memory or the another memory may be modified when the utility meter is sealed.
2. The system of clause 1, wherein the table cannot be modified when the utility meter is sealed.
3. The system of any preceding clause, wherein the processing device is configured to block modification of the non-modifiable data when the utility meter is sealed.
4. The system of any preceding clause, wherein the processing device is configured to enable modification of the modifiable data when the utility meter is sealed.
5. The system of any preceding clause, wherein the utility meter comprises an electricity meter, a water meter, a natural gas meter, or a combination thereof.
6. The system of any preceding clause, wherein the specific data comprises metering data, parameters, or a combination thereof.
7. The system of any preceding clause, wherein the specific data comprises meter configuration data, calibration data, measuring quantities, or a combination thereof.
8. The system of any preceding clause, wherein the specific data comprises a component of firmware.
9. The system of any preceding clause, wherein the table is an external table that is not hard-coded into a computer program.
10. The system of any preceding clause, wherein the table is modifiable when the utility meter is unsealed.
11. A non-transitory computer-readable medium having computer executable code stored thereon, the code comprising instructions for:
   accessing an external table stored on a memory of a utility meter or another memory external to the utility meter, wherein the external table specifies modifiable data that may be modified when the utility meter is sealed and non-modifiable data that may not be modified when the utility meter is sealed; and
   determining, based on the external table, whether specific data stored on the memory or the another memory may be modified when the utility meter is sealed.
12. The non-transitory computer-readable medium of any preceding clause, wherein the code comprises instructions for:
   blocking modification of the external table when the utility meter is sealed.
13. The non-transitory computer-readable medium of any preceding clause, wherein the code comprises instructions for:
   blocking modification of the non-modifiable data when the utility meter is sealed.
14. The non-transitory computer-readable medium of any preceding clause, wherein the code comprises instructions for:
   enabling modification of the modifiable data when the utility meter is sealed.
15. The non-transitory computer-readable medium of any preceding clause, wherein the utility meter comprises an electricity meter, a water meter, a natural gas meter, or a combination thereof.
16. The non-transitory computer-readable medium of any preceding clause, wherein the specific data comprises metering data, parameters, or a combination thereof.
17. The non-transitory computer-readable medium of any preceding clause, wherein the specific data comprises a component of firmware.
18. A system comprising:
   a memory storing a table, wherein the table specifies modifiable data that may be modified when a utility meter is sealed or non-modifiable data that may not be modified when the utility meter is sealed; and
   a processing device configured to access the table stored on the memory or another memory to determine whether specific data stored on the memory or the another memory may be modified when the utility meter is sealed.
19. The system of any preceding clause, comprising the utility meter comprising the memory or the processing device.
20. The system of any preceding clause, wherein the table specifies the modifiable data that may be modified when the utility meter is sealed and the non-modifiable data that may not be modified when the utility meter is sealed.

## Claims

1. A system comprising:
a utility meter (18), comprising:
a memory (26) storing a table (30), wherein the table (30) specifies modifiable data that may be modified when the utility meter (18) is sealed and/or non-modifiable data that may not be modified when the utility meter (18) is sealed; and
a processing device (24) configured to access the table (30) stored on the memory (26) or another memory to determine whether specific data stored on the memory (26) or the another memory may be modified when the utility meter (18) is sealed.

2. The system of claim 1, wherein the table (30) cannot be modified when the utility meter (18) is sealed.

3. The system of claim 1 or claim 2, wherein:
the processing device (24) is configured to block modification of the non-modifiable data when the utility meter (18) is sealed, and/or
the processing device (24) is configured to enable modification of the modifiable data when the utility meter (18) is sealed.

4. The system of claim 1, 2 or 3, wherein the specific data comprises metering data, parameters, or a combination thereof, wherein, preferably, the specific data comprises meter configuration data, calibration data, measuring quantities, or a combination thereof.

5. The system of any preceding claim, wherein the specific data comprises a component of firmware.

6. The system of any preceding claim, wherein the table (30) is an external table that is not hard-coded into a computer program.

7. The system of any preceding claim, wherein the table (30) is modifiable when the utility meter (18) is unsealed.

8. A non-transitory computer-readable medium having computer executable code stored thereon, the code comprising instructions for:
accessing (58) an external table stored on a memory of a utility meter or another memory external to the utility meter, wherein the external table specifies modifiable data that may be modified when the utility meter is sealed and/or non-modifiable data that may not be modified when the utility meter is sealed; and
determining (60), based on the external table, whether specific data stored on the memory or the another memory may be modified when the utility meter is sealed.

9. The non-transitory computer-readable medium of claim 8, wherein the code comprises instructions for:
blocking modification of the external table when the utility meter is sealed,
and/or
blocking modification of the non-modifiable data when the utility meter is sealed.

10. The non-transitory computer-readable medium of claim 8 or claim 9, wherein the code comprises instructions for:
enabling (64) modification of the modifiable data when the utility meter is sealed.

11. The non-transitory computer-readable medium of claim 8, 9 or 10, wherein the specific data comprises metering data, parameters, or a combination thereof.

12. The non-transitory computer-readable medium of claim 8, 9, 10 or 11, wherein the specific data comprises a component of firmware.

13. A system comprising:
a memory (26) storing a table (30), wherein the table (30) specifies modifiable data that may be modified when a utility meter (18) is sealed or non-modifiable data that may not be modified when the utility meter (18) is sealed; and
a processing device (24) configured to access the table (30) stored on the memory (26) or another memory to determine whether specific data stored on the memory (26) or the another memory may be modified when the utility meter (18) is sealed.

14. The system of claim 13, comprising the utility meter (18) comprising the memory (26) or the processing device (24).

15. The system of claim 13 or claim 14, wherein the table (30) specifies the modifiable data that may be modified when the utility meter (18) is sealed and the non-modifiable data that may not be modified when the utility meter (18) is sealed.
